Europäisches Patentamt

European Patent Office

Office européen des brevets

(19)

(11) Veröffentlichungsnummer: **0 025 899**
**B1**

(12) **EUROPÄISCHE PATENTSCHRIFT**

(45) Veröffentlichungstag der Patentschrift: **28.12.83**

(21) Anmeldenummer: **80105165.7**

(22) Anmeldetag: **29.08.80**

(51) Int. Cl.³: **H 04 L 17/00,**
**H 04 L 13/08, G 06 F 3/04**

(54) **Schaltungsanordnung zum Übertragen von Daten.**

(30) Priorität: **19.09.79 DE 2937903**

(43) Veröffentlichungstag der Anmeldung:
**01.04.81 Patentblatt 81/13**

(45) Bekanntmachung des Hinweises auf die Patenterteilung:
**28.12.83 Patentblatt 83/52**

(84) Benannte Vertragsstaaten:
**BE CH DE FR IT LI NL SE**

(56) Entgegenhaltungen:
**DE - A - 2 813 687**
**DE - B - 2 634 669**

**SIEMENS-ZEITSCHRIFT, 51. Jahrgang, April**
**1977, Siemens AG in Berlin und München B.**
**PEUKERT und H. SENGER "Schreibstation PT**
**80" Seiten 215-218**
**SIEMENS-ZEITSCHRIFT, 51. Jahrgang, Juni**
**1977, Siemens AG in Berlin und München F.**
**GIEBLER und R. HILLMANN "Steuerung mit LSI-**
**Schaltkreisen für die Schreibstation PT 80"**
**Seiten 484-488**

(73) Patentinhaber: **SIEMENS AKTIENGESELLSCHAFT**
**Berlin und München Wittelsbacherplatz 2**
**D-8000 München 2 (DE)**

(72) Erfinder: **Egey, Thomas, Dr.**
**Hans-Sailer-Strasse 14**
**D-8011 Neukeferloh (DE)**
Erfinder: **Sendlinger, Harald, Dipl.-Ing.**
**Eschenriederstrasse 9**
**D-8060 Dachau (DE)**

Courier Press, Leamington Spa, England.

## Schaltungsanordnung zum Übertragen von Daten

Die Erfindung bezieht sich auf eine Schaltungsanordnung zum Übertragen von Daten von Eingabeeinheiten zu Ausgabeeinheiten einer Büro-, Fern- oder Datenschreibmaschine, bei der die Eingabeeinheiten und die Ausgabeeinheiten an einer Sammelleitung (Datenbus) angeschlossen sind.

Büro-, Fern- oder Datenschreibmaschinen enthalten eine Mehrzahl von Eingabeeinheiten und Ausgabeeinheiten. Eingabeeinheiten sind beispielsweise eine Tastatur oder ein Lochstreifenleser. Als Ausgabeeinheiten sind beispeilsweise ein Drucker, ein Bildschirm oder ein Lochstreifenlocher vorgesehen. Kombinierte Ein- und Ausgabeeinheiten sind Nachrichtenspeicher, die beispielsweise als Halbleiterspeicher, Magnetbandkassettengeräte oder Floppy-Diskgeräte ausgebildet sind.

Bei bekannten Fernschreibmaschinen (DE—B1—2 634 669) steht zwischen den Eingabeeinheiten und dem Sender und den Ausgabeeinheiten und dem Empfänger jeweils nur ein Verbindungsweg zur Verfügung und eine simultane Übertragung von Daten zwischen den Eingabeeinheiten und den Ausgabeeinheiten in beliebiger Zuordnung ist nicht vorgesehen. Bei modernen Fernschreibmaschinen ist es jedoch wünschenswert, daß mehrere Bearbeitungs-vorgänge parallel ablaufen. Beispielsweise soll eine Nachricht aus einem Nachrichtenspeicher zu einem fernen Teilnehmer gesendet werden, während gleichzeitig eine empfangene Nachricht im Nachrichtenspeicher gespeichert wird. Gleichzeitig soll mit Hilfe der übrigen Ein/Ausgabeeinheiten lokal eine weitere Nachricht vorbereitet werden können. Ein derartiger Simultanbetrieb war bisher nicht möglich.

Es wäre denkbar, eine Anzahl von Datenwegen zu verwenden, die gleich ist der Anzahl der möglichen Verbindungen zwischen den Eingabeeinheiten und den Ausgabeeinheiten. Eine derartige Schaltungsanordnung würde jedoch einen sehr großen Aufwand erfordern.

Der Erfindung liegt daher die Aufgabe zugrunde, eine Schaltungsanordnung zum Übertragen von Daten von Eingabeeinheiten zu Ausgabeeinheiten einer Büro-, Fern- oder Datenschreibmaschine anzugeben, bei der zwischen den Eingabeeinheiten und Ausgabeeinheiten eine einzige Sammelleitung (Datenbus) vorgesehen ist und die eine simultane Übertragung von Daten zwischen unterschiedlichen Eingabeeinheiten und unterschiedlichen Ausgabeeinheiten ermöglicht.

Erfindungsgemäß wird die Aufgabe bei der Schaltungsanordnung der eingangs genannten Art dadurch gelöst, daß eine Mehrzahl von Pufferspeichern vorgesehen ist, die jeweils einen Verbindungsweg zwischen mindestens einer Eingabeeinheit und mindestens einer Ausgabeeinheit zugeordnet sind und die bei einer simultanen Übertragung von Daten zwischen den Eingabeeinheiten und den Ausgabeeinheiten die Daten wechselweise zwischenspeichern.

Die Schaltungsanordnung gemäß der vorliegenden Erfindung hat den Vorteil, daß sie einen geringen Aufwand erfordert, da nur eine einziger Datenbus erforderlich ist und dennoch mehrere Vorgänge simultan bearbeitet werden können. Weiterhin hat die Schaltungsanordnung den Vorteil, daß durch die Verwendung der Pufferspeicher ein Geschwindigkeitsausgleich zwischen den Eingabeeinheiten und den Ausgabeeinheiten erfolgt. Beispielsweise kann mit Hilfe einer Eingabeeinheit schneller eingeschrieben werden als ausgelesen wird und umgekehrt kann bei einem weitgehend gefüllten Pufferspeicher schneller ausgelesen als eingeschrieben werden.

Die Schaltungsanordnung erfordert insbesondere dann einen geringen Aufwand, wenn die Pufferspeicher Bestandteile eines Datenspeichers sind. In diesem Fall erfolgt die Zuordnung zu den einzelnen Verbindungswegen lediglich durch eine Umschaltung der Adressen des Datenspeichers. Insbesondere ist es vorteilhaft, wenn die Pufferspeicher Bestandteile eines Datenspeichers sind, der zusätzlich einen Arbeitsspeicher und einen Nachrichtenspeicher enthält. In diesem Fall wird der Aufwand für die Pufferspeicher besonders gering.

Eine vorteilhafte Ausgestaltung der Schaltungsanordnung ist dadurch gekennzeichnet, daß mindestens einer der Pufferspeicher als Kurzzeitspeicher für empfangene Nachrichten dient. In diesem Pufferspeicher können beispeilsweise bei einer Fernschreibmaschine empfangene Daten zwischengespeichert werden, während im Lokalbetrieb mit Hilfe der Tastatur und des Lesers eine Nachricht erstellt wird und am Drucker oder am Lochstreifenlocher ausgegeben wird.

Die Steuerung der Übertragung zwischen den Ein- und Ausgabeeinheiten wird dann besonders einfach, wenn die wechselweise Zwischenspeicherung der Daten in die Pufferspeicher im Zeitmultiplexbetrieb erfolgt. Hierbei ist es zweckmäßig, daß die simultane Übertragung der Daten zwischen den Eingabeeinheiten und Ausgabeeinheiten unter Steuerung eines Mikrorechners erfolgt.

Im folgenden wird ein Ausführungsbeispiel der Schaltungsanordnung anhand von Zeichnungen näher erläutert. Es zeigen:

Fig. 1 ein Funktionsschaltbild der Schaltungsanordnung,

Fig. 2 ein Blockschaltbild der Schaltungsanordnung.

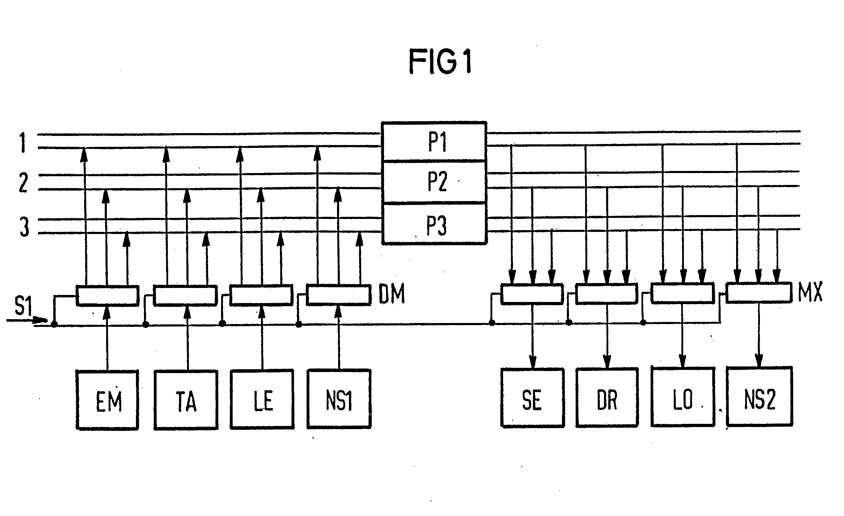

Bei dem in Fig. 1 dargestellten Funktionsschaltbild ist eine Mehrzahl von Eingabeeinheiten und Ausgabeeinheiten einer Fernschreibmaschine dargestellt. Als Eingabeeinheiten dienen eine Empfänger EM, eine Tastatur TA, ein Lochstreifenleser LE und ein Nachrichtenspeicher NS1. Anstelle des Lochstreifenlesers können auch ein Magnetbandkassettengerät oder ein Floppy-Disk-Gerät angeschlossen sein. Als Ausgabeeinheiten sind ein Sender SE, ein Drucker DR, ein Lochstreifenlocher LO und ein Nachrichtenspeicher NS2 vorgesehen, der mit dem Nachrichtenspeicher NS1 identisch sein kann. Anstelle des Lochstreifenlochers LO können ebenfalls ein Magnetbandkassettengerät oder ein Floppy-Disk-Gerät angeschlossen sein. Zusätzlich kann als Ausgabeeinheit auch ein Datensichtgerät angeschlossen sein.

Die Eingabeeinheiten sind über Verbindungswege und drei Pufferspeicher P1 bis P3 mit den Ausgabeeinheiten verbunden. Diese Verbindungswege sind nur in dem Funktionsbild als getrennte Verbindungswege zu betrachten und in der Schaltungsanordnung als ein einziger Datenbus vorgesehen. Auch die Pufferspeicher P1 bis P3 sind nicht zwischen den Verbindungswegen angeordnet, sondern in ähnlicher Weise wie die Ein- und Ausgabeeinheiten an dem Datenbus angeschlossen. Die Zuordnung der Eingabeeinheiten zu den einzelnen Verbindungswegen kann durch Demultiplexer DM dargestellt werden, die eingangsseitig jeweils mit einer Eingabeeinheit und ausgangsseitig mit den drei Verbindungswegen verbunden sind. In entsprechender Weise kann die Zuordnung der Verbindungswege zu den Ausgabeeinheiten durch Multiplexer MX dargestellt werden, deren Eingänge mit den drei Verbundswegen verbunden sind und an deren Ausgang jeweils eine Ausgabeeinheit angeschlossen ist. Die Zuordnung der Eingabeeinheiten und Ausgabeeinheiten zu den Verbindungswegen kann durch entsprechende Signale S1 erfolgen. Diese Zuordnung wird jedoch bei der eigentlichen Schaltungsanordnung mit Hilfe eines Mikrorechners durchgeführt. Diese wählbare Zuordnung ermöglicht eine flexible Definition von Betriebszuständen der Fernschreibmaschine.

Im Ruhezustand sind alle Ein- und Ausgabeeinheiten inaktiv, und es werden keine Daten übertragen.

Im Lokalbetrieb der Fernschreibmaschine können Daten von der Tastatur TA, vom Lochstreifenleser LE und/oder vom Nachrichtenspeicher NS1 über den dem Pufferspeicher P1 zugeordneten Verbindungsweg 1 zum Drucker DR und/oder Lochstreifenlocher LO übertragen werden. Auch können die Daten in den Nachrichtenspeicher NS2 eingespeichert werden. Über den Sender SE und den Empfänger EM werden in diesem Fall keine Daten übertragen.

Bei einem bei der Fernschreibmaschine ankommenden Ruf wird der Lokalbetrieb unterbrochen und ein Leitungsbetrieb eingestellt. Im Leitungsbetrieb werden vom Empfänger EM empfangene Daten über den entsprechenden Demultiplexer DM über den Verbindungsweg 2 und den Pufferspeicher P2 zum Nachrichtenspeicher NS2, zum Drucker DR und/oder zum Lochstreifenleser LO übertragen. Gleichzeitig können von der Tastatur TA, dem Lochstreifenleser LE und dem Nachrichtenspeicher NS1 über die entsprechenden Demultiplexer DM und den Verbindungsweg 1 und den Pufferspeicher P1 zum Sender SE übertragen werden.

Bei einem ungestörten Lokalbetrieb, bei dem auch gesendet werden soll, können Daten mit Hilfe der Tastatur TA, des Lochstreifenlesers LE und des Nachrichtenspeichers NS1 eingegeben werden, über den Verbindungsweg 1 und den Pufferspeicher P1 zum Drucker DR, Lochstreifenlocher LO und zum Nachrichtenspeicher NS2 übertragen werden. Gleichzeitig können vom Empfänger EM empfangene Daten über den Verbindungsweg 2 zum Pufferspeicher P2 geschaltet werden und dort zwischengespeichert werden. Zusätzlich können Daten vom Nachrichtenspeicher NS1 über den Verbindungsweg 3 und den Pufferspeicher P3 zum Sender SE übertragen werden.

Die Übertragung der Daten auf den drei Verbindungswegen erfolgt simultan unter Verwendung der Pufferspeicher P1 bis P3, in denen die Daten, ähnlich wie bei einem Zeitmultiplexbetrieb, wechselweise zwischengespeichert werden. Die Daten werden in einer vorgegebenen Reihenfolge von den Eingabeeinheiten in die Pufferspeicher P1 bis P3 eingelesen und in der gleichen Reihenfolge wieder aus den Pufferspeichern ausgelesen und zu den Ausgabeeinheiten übertragen.

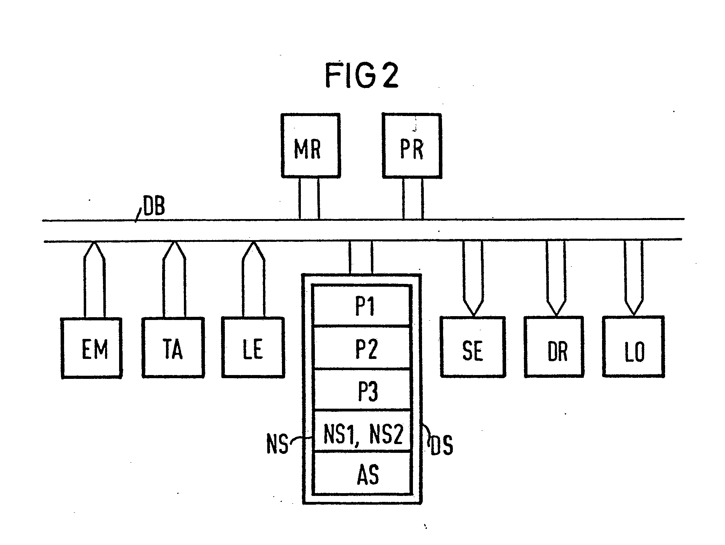

Bei dem in Fig. 2 dargestellten Blockschaltbild sind an einem einzigen Datenbus DB die Eingabeeinheiten EM, TA, LE und die Ausgabeeinheiten SE, DR und LO angeschlossen. Weiterhin sind an dem Datenbus DB ein den zeitlichen Ablauf der Übertragung der Daten steuernder Mikrorechner MR und ein zugehöriger Programmspeicher PR angeschlossen. Die Pufferspeicher P1 bis P3 sind Bestandteile eines Datenspeichers DS, der zusätzlich die Nachrichtenspeicher NS1 und NS2 und gegebenenfalls einen Arbeitsspeicher AS enthält. Unter Steuerung des Mikrorechners MR werden in der Weise, wie es in Fig. 1 dargestellt wurde, die von den Eingabeeinheiten abgegebenen Daten je nach dem zugehörigen Verbindungsweg in die Pufferspeicher P1 bis P3 eingeschrieben und wieder aus diesen ausgelesen und zu den Ausgabeeinheiten übertragen. Falls beispielsweise der ungestörte Lokalbetrieb mit Senden durchgeführt wird, werden in einem ersten Zeitabschnitt des Zeitmultiplexbetriebs die von der Tastatur TA, dem Lochstreifenleser LE oder dem Nachrichtenspeicher NS abgegebenen Daten über den Datenbus DB in den Pufferspeicher P1 eingeschrieben. In einem zweiten Zeitabschnitt werden die vom Empfänger EM abgegebenen Daten über den Datenbus DB in den Pufferspeicher P2 eingespeichert. In einem dritten Zeitabschnitt werden schließlich die vom Nachrichtenspeicher NS abgegebenen Daten in den Pufferspeicher P3 eingespeichert. Anschließend werden die zuerst in den Pufferspeicher P1 eingespeicherten

Daten ausgelesen und zum Nachrichtenspeicher NS, zum Drucker DR und/oder zum Lochstreifenlocher LO übertragen. In einem anschließenen Zeitabschnitt würden die Daten aus dem Pufferspeicher P2 entnommen werden. Dieser ist jedoch so ausgebildet, daß er für ein Zwischenspeichern von empfangenen Nachrichten vorgesehen ist und eine große Speicherkapazität aufweist. Eine Entnahme aus dem Pufferspeicher P2 findet erst dann statt, wenn dieser vollständig gefüllt ist. Es wäre aber dankbar, in diesem Zeitabschnitt die Daten aus dem Pufferspeicher P2 auszulesen und in den Nachrichtenspeicher NS einzuspeichern. Schließlich werden in dem letzten Zeitabschnitt die Daten aus dem Pufferspeicher P3 entnommen und zum Sender SE übertragen.

Unter Verwendung der Pufferspeicher P1 bis P3 ist es somit möglich, eine zeitmultiplexe Übertragung von Daten zwischen den Eingabeeinheiten und den Ausgabeeinheiten durchzuführen, so daß mehrere Vorgänge simultan bearbeitet werden können.

Es wird nochmals darauf hingewiesen, daß die in Fig. 1 dargestellten drei Verbindungswege nur zur besseren Verständlichkeit der Funktion der Schaltungsanordnung dargestellt wurden, jedoch in der Schaltungsanordnung nur ein einziger Datenbus vorgesehen ist, an dem die Ein- und Ausgabeeinheiten und die Pufferspeicher P1 bis P3 angeschlossen sind.

## Patentansprüche

1. Schaltungsanordnung zum Übertragen von Daten von Eingabeeinheiten (EM, TA, LE, NS1) zu Ausgabeeinheiten (SE, DR, LO, NS2) einer Büro-, Fern- oder Datenschreibmaschine, bei der die Eingabeeinheiten und die Ausgabeeinheiten an einer Sammelleitung angeschlossen sind, dadurch gekennzeichnet, daß eine Mehrzahl von Pufferspeichern (P1 bis P3) vorgesehen ist, die jeweils einem Verbindungsweg zwischen mindestens einer Eingabeeinheit (EM, TA, LE, NS1) und mindestens einer Ausgabeeinheit (SE, DR, LO, NS2) zugeordnet sind und die bei einer simultanen Übertragen von Daten zwischen den Eingabeeinheiten (EM, TA, LE, NS1) und den Ausgabeeinheiten (SE, DR, LO, NS2) die Daten entsprechend den Verbindungswegen wechselweise zwischenspeichern.

2. Schaltungsanordnung nach Anspruch 1, dadurch gekenzeichnet, daß die Pufferspeicher (P1 bis P3) Bestandteile eines Datenspeichers (DS) sind.

3. Schaltungsanordnung nach Anspruch 1 oder Anspruch 2, dadurch gekennzeichnet, daß die Pufferspeicher (P1 bis P3) Bestandteile eines Datenspeichers (DS) sind, der zusätzlich einen Arbeitsspeicher (AS) und einen Nachrichtenspeicher (NS) enthält.

4. Schaltungsanordnung nach einem der Ansprüche 1 bis 3, dadurch gekennzeichnet, daß mindestens einer der Pufferspeicher (P2) als Kurzzeitspeicher für empfangene Nachrichten ausgebildet ist.

5. Schaltungsanordnung nach einem der Ansprüche 1 bis 4, dadurch gekennzeichnet, daß die wechselweise Zwischenspeicherung der Daten in den Pufferspeichern (P1 bis P3) zyklisch erfolgt.

6. Schaltungsanordnung nach einem der Ansprüche 1 bis 5, dadurch gekennzeichnet, daß die Übertragung der Daten zwischen den Eingabeeinheiten (EM, TA, LE, NS1) und den Ausgabeeinheiten (SE, DR, LO, NS2) unter Steuerung eines Mikrorechners (MR) erfolgt.

## Revendications

1. Montage pour la transmission de données d'unités d'entrée (EM, TA, LE, NS1) à des unités de sortie (SE, DR, LO, NS2) de machines à écrire de bureau, de téléscripteurs ou d'imprimantes, dans laquel les unités d'entrée et les unités de sortie sont reliées à une ligne collective, caractérisé par le fait qu'il est prévu une pluralité de mémoires-tampons (P1 à P3) qui sont respectivement associées à une voie de liaison entre au moins une unité d'entrée (EM, TA, LE, NS1) et au moins une unité de sortie (SE, DR, LO, NS2), et qui, lors d'une transmission simultanée de données entre les unités d'entrée (EM, TA, LE, NS1) et les unités de sortie (SE, DR, LO, NS2), mémorisent temporairement et alternativement les données en fonction des voies de liaison.

2. Montage selon la revendication 1, caractérisé par le fait que les mémoires-tampons (P1 à P3) sont des éléments constitutifs d'une mémoire de données (DS).

3. Montage selon la revendication 1 ou la revendication 2, caractérisé par le fait que les mémoires-tampons (P1 à P3) sont des éléments constitutifs d'une mémoire de données (DS) qui comporte, en plus, une mémoire de travail (AS) et une mémoire d'informations (NS).

4. Montage selon l'une des revendications 1 à 3, caractérisé par le fait qu'au moins l'une des mémoires-tampons (P2) est réalisée sous la forme d'une mémoire à durée de mémorisation courte pour des informations reçues.

5. Montage selon l'une des revendications 1 à 4, caractérisé par le fait que la mémorisation temporaire et alternée des données dans les mémoires-tampons (P1 à P3) est opérée cycliquement.

6. Montage selon l'une des revendications 1 à 5, caractérisé par le fait que la transmission des données entre les unités d'entrée (EM, TA, LE, NS1) et les unités de sortie (SE, DR, LO, NS2) a lieu sous la commande d'un micro-ordinateur (MR).

## Claims

1. Circuit arrangement for the transmission of data from input units (EM, TA, LE, NS1) to output units (SE, DR, LO, NS2) of an office typewriter, teleprinter or data-printer, wherein the input units and the output units are connected to a bus line, characterised in that there is provided a plurality of buffer stores (P1 to P3) which are respectively assigned to a connection path between at least one input unit (EM, TA, LE, NS1) and at least one output unit (SE, DR, LO, NS2) and which in the case of a simultaneous transmission of data between the input units (EM, TA, LE, NS1) and the output units (SE, DR, LO, NS2), temporarily store the data in alternation in accordance with the connection paths.

2. Circuit arrangement as claimed in Claim 1, characterised in that the buffer stores (P1 to P3) are components of a data store (DS).

3. Circuit arrangement as claimed in Claim 1 or Claim 2, characterised in that the buffer stores (P1 to P3) are components of a data store (DS) which additionally includes an operating store (AS) and a message store (NS).

4. Circuit arrangement as claimed in one of Claims 1 to 4, characterised in that at least one of the buffer stores (P2) is designed as a short term store for received messages.

5. Circuit arrangement as claimed in one of Claims 1 to 4, characterised in that the alternating intermediate storage of the data into the buffer stores (P1 to P3) is carried out cyclically.

6. Circuit arrangement as claimed in one of Claims 1 to 5, characterised in that the transmission of the data between the input units (EM, TA, LE, NS1) and the output units (SE, DR, LO, NS2) is carried out under the control of a microcomputer (MR).

# FIG 1

0025 899

# FIG 2